# EUROPÄISCHE PATENTSCHRIFT

(11) **EP 3 066 362 B1**
(45) Veröffentlichungstag und Bekanntmachung des Hinweises auf die Patenterteilung: **24.03.2021**
(21) Anmeldenummer: 14789525.4
(22) Anmeldetag: 21.10.2014
(51) Int. Cl.: F16H 57/03

(54) **GEHÄUSE FÜR EIN GETRIEBE**
HOUSING FOR A GEAR
BOÎTE DE TRANSMISSION

(30) Priorität: 08.11.2013 DE 102013018709
(43) Veröffentlichungstag der Anmeldung: 14.09.2016
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2014/002828
(87) Internationale Veröffentlichungsnummer: WO 2015/067341

(56) Entgegenhaltungen:
- DE-A1-102008 004 337
- DE-A1-102008 004 337
- US-B2- 7 810 412

## Beschreibung

Die Erfindung betrifft ein Gehäuse für ein Getriebe.

Es ist allgemein bekannt, dass in einem Gehäuse für ein Getriebe Lageraufnahmen vorsehbar sind zur Aufnahme von Lagern einer Welle des Getriebes, wie Abtriebswelle, Zwischenwelle oder eintreibender Welle.

**Aus der** DE 10 2008 004337 A1 **ist als nächstliegender Stand der Technik ein Gehäuse für ein Getriebe bekannt, wobei gewichtsreduzierende Varianten aufgezeigt werden, also ressourcenschonend herstellbare Varianten zur Schonung der Umwelt.**

**Aus der** US 7810 412 B2 **ist ein Getriebegehäuse bekannt, das Vibrationsunterdrückende gewichtserhöhende und somit nicht ressourcen- und umweltschonende Materialbereiche vorgesehen sind.**

Der Erfindung liegt daher die Aufgabe zugrunde, ein Gehäuse für ein Getriebe weiterzubilden, wobei die Umwelt geschont sein soll.

Erfindungsgemäß wird die Aufgabe bei dem Gehäuse für ein Getriebe nach den in Anspruch 1 angegebenen Merkmalen gelöst.

Wichtige Merkmale der Erfindung bei dem Gehäuse für ein Getriebe sind, dass das Gehäuse ein auf ein Gehäuseunterteil aufgesetztes Gehäuseoberteil aufweist,
wobei eine erste Lageraufnahme für ein erstes Lager einer Welle von einem ersten Lagerbalken des Gehäuseoberteils und von einem ersten Lagerbalken des Gehäuseunterteils gebildet ist,
wobei eine zweite Lageraufnahme für ein zweites Lager einer Welle von einem zweiten Lagerbalken des Gehäuseoberteils und von einem zweiten Lagerbalken des Gehäuseunterteils gebildet ist,
**wobei** ein erster Endbereich eines erstens Lagerbalkens des Gehäuseunterteils und ein erster Endbereich eines zweitens Lagerbalkens des Gehäuseunterteils mittels zweier, voneinander beabstandeter Endplatten verbunden ist,

Von Vorteil ist dabei, dass eine hohe mechanische Stabilität und geringer Verdrehsteifigkeit erreichbar ist. Das restliche Gehäuse ohne die versteifenden Abschnitte ist mit dünner Wandstärke ausführbar, also mit einer maximalen Wandstärke, welche kleiner ist als die maximale oder minimale Wandstärke der versteifenden Abschnitte, insbesondere wie Lagerbalken, Endplatten, Fußplatte, Abstandshalter, Stützbalken, Stützabschnitte. Auf diese Weise ist also der Materialverbrauch verringerbar und somit der Ressourcenverbrauch verringerbar, was die Umwelt schützt.

Bei einer vorteilhaften Ausgestaltung ist ein zweiter, also der andere, Endbereich des erstens Lagerbalkens des Gehäuseunterteils und ein zweiter, also der andere, Endbereich des zweitens Lagerbalkens des Gehäuseunterteils mittels zweier, voneinander beabstandeter Endplatten verbunden. Von Vorteil ist dabei, dass die Stabilität mittels der als Querverstrebungen wirksamen Endplatten erhöht ist.

Bei einer vorteilhaften Ausgestaltung ist ein erster Endbereich eines ersten Lagerbalkens des Gehäuseoberteils und ein erster Endbereich eines zweiten Lagerbalkens des Gehäuseoberteils mittels zweier, voneinander beabstandeter Endplatten verbunden,
wobei
ein zweiter, also der andere, Endbereich des erstens Lagerbalkens des Gehäuseoberteils und
ein zweiter, also der andere, Endbereich des zweitens Lagerbalkens des Gehäuseoberteils mittels zweier, voneinander beabstandeter Endplatten verbunden ist. Von Vorteil ist dabei, dass das Gehäuseoberteil auf dem Gehäuseunterteil aufliegt und somit eine dichte Verbindung ermöglicht ist bei gleichzeitig hoher Stabilität.

Bei einer vorteilhaften Ausgestaltung berührt zumindest eine der Endplatten des Gehäuseoberteils eine der endplatten des Gehäuseunterteils. Von Vorteil ist dabei, dass

Bei einer vorteilhaften Ausgestaltung sind zwischen Endplatten des Gehäuseoberteils, welche an den ersten Endbereichen der Lagerbalken des Gehäuseoberteils verbunden sind, Abstandshalter angeordnet
und/oder
zwischen Endplatten des Gehäuseunterteils, welche an den ersten Endbereichen der Lagerbalken des Gehäuseunterteils verbunden sind, sind Abstandhalter angeordnet. Von Vorteil ist dabei, dass die Gewichtskraft der jeweils oberen Endplatte im Wesentlichen über die Abstandshalter ableitbar ist. Über die sonstigen Bereiche des Gehäuseunterteils mit dünner Wandstärke sind keine wesentlichen Kräfte ableitbar.

Bei einer vorteilhaften Ausgestaltung sind die Lagerbalken des Gehäuseunterteils mittels Stützbalken und/oder Stützabschnitten mit Fußplatten des Gehäuseunterteils verbunden, insbesondere zur Ableitung der Gewichtskraft der Lagerbalken. Von Vorteil ist dabei, dass die Gewichtskraft durch diese verdickten Bereiche ableitbar **ist,** so dass die sonstigen Oberflächenabschnitte des Gehäuseunterteils mit dünner Wandstärke ausführbar sind, also mit einer derartigen maximalen Wandstärke, die kleiner ist als die größte Wandstärke des Gehäuseunterteils.

Bei einer vorteilhaften Ausgestaltung sind die Lagerbalken, Endplatten, Abstandshalter, Stützbalken, Stützabschnitte und Fußplatte des Gehäuseunterteils einstückig, insbesondere einteilig, ausgeführt, insbesondere als Stahlgussteil. Von Vorteil ist dabei, dass das Gehäuseunterteil als Stahlgussteil ausformbar ist und nur geringer Nachbearbeitung bedarf.

Bei einer vorteilhaften Ausgestaltung sind die Lagerbalken, Endplatten, Abstandshalter des Gehäuseoberteils einstückig, insbesondere einteilig, ausgeführt, insbesondere als Stahlgussteil. Von Vorteil ist dabei, dass Von Vorteil ist dabei, dass das Gehäuseoberteil als Stahlgussteil ausformbar ist und nur geringer Nachbearbeitung bedarf.

Bei einer vorteilhaften Ausgestaltung erstrecken sich die Endplatten in einer Richtung weiter, die senkrecht zur Richtung ausgerichtet ist, welche der weitesten Erstreckung der Lagerbalken zugeordnet ist,
insbesondere wobei die Stützbalken und/oder Stützabschnitte hauptsächlich in einer Richtung erstrecken, welche senkrecht zu den beiden Richtungen ausgerichtet ist. Von Vorteil ist dabei, dass eine hohe Stabilität erstrecken.

Bei einer vorteilhaften Ausgestaltung ist das Gehäuseunterteil schalenartig ausgeformt, wobei restliche Bereiche des Gehäuseunterteils eine geringere Wandstärke aufweisen als die Wandstärke der Endplatte, der Lagerbalken und/oder der Stützabschnitte und/oder der Stützbalken beträgt. Von Vorteil ist dabei, dass das Gehäuse aus zwei Schalen zusammensetzbar ist. Die untere Schale nimmt hierbei den Ölsumpf auf.

Die Erfindung wird nun anhand von Abbildungen näher erläutert:

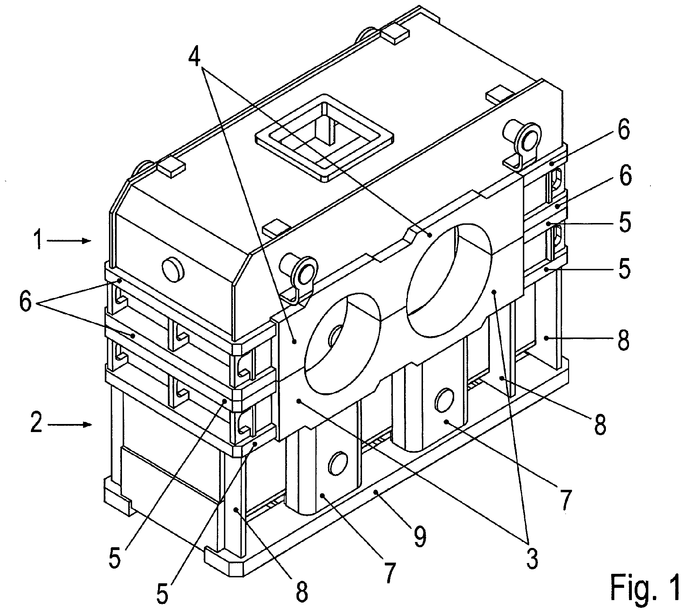

In der Figur 1 ist ein Getriebegehäuse in Schrägansicht gezeigt.

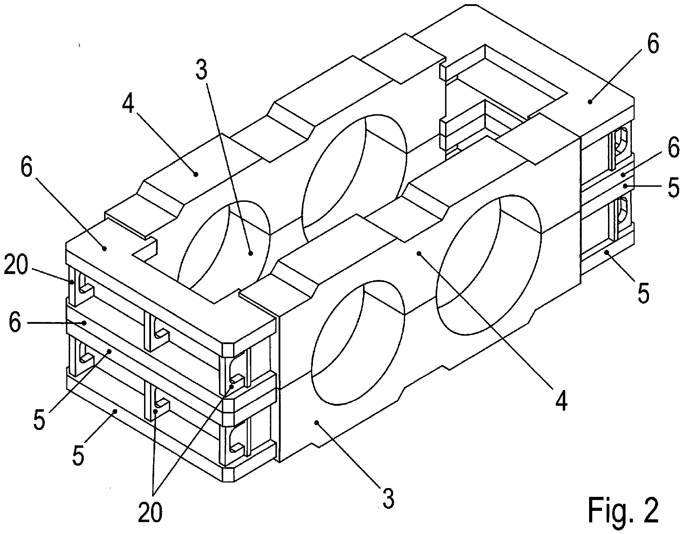

In der Figur 2 ist die Lageraufnahme des Getriebegehäuses in Schrägansicht vergrößert dargestellt.

Das Gehäuse weist ein Gehäuseunterteil 2 auf, auf dem ein Gehäuseoberteil 1 aufgesetzt ist.

Zur Lagerung von Wellen des Getriebes mittels Wälzlagern, insbesondere Kugellager oder Schräglager oder dergleichen, sind am Getriebegehäuse Lageraufnahmen ausgeformt und entsprechend fein bearbeitet.

Ein erster Teil jeder Lageraufnahme ist als Lagerbalken 3 ausgeformt, der zwei halbzylindrische Ausnehmungen aufweist zur Aufnahme von zwei Lagern, und im Gehäuseunterteil 2 angeordnet.

Ein weiterer Teil jeder Lageraufnahme ist als Lagerbalken 4 ausgeformt, der zwei halbzylindrische Ausnehmungen aufweist zur Aufnahme von zwei Lagern, und im Gehäuseoberteil 1 angeordnet.

Beim Aufsetzen des Gehäuseoberteils 1 auf das Gehäuseunterteil 2 wird der obere Lagerbalken 4 auf den unteren Lagerbalken 3 aufgesetzt, so dass die Teile der jeweiligen Lageraufnahmen aneinander anliegen und die jeweilige Lageraufnahme bilden. Jede Lageraufnahme umfasst einen zylindrischen Raumbereich, in welchen ein Lager einführbar ist und somit eine Welle über das Lager in der Lageraufnahme des Gehäuses lagerbar.

Die beiden parallel zueinander ausgerichteten Lagerbalken 4 des Gehäuseoberteils 1 sind an ihrem ersten Endbereich mittels zwei voneinander beabstandeten, parallel zueinander ausgerichteten Endplatten 6 verbunden. Auch an ihrem anderen Endbereich sind die Lagerbalken 4 mittels zwei voneinander beabstandeten, parallel zueinander ausgerichteten Endplatten 6 verbunden. Die Endplatte 6 erstrecken sich in einer ersten Richtung mehr als in jeder anderen hierzu transversalen Richtung. Die Lagerbalken 4 erstrecken sich in einer zweiten Richtung mehr als in jeder anderen zur zweiten Richtung transversalen Richtung. Die erste und die zweite Richtung sind senkrecht zueinander ausgerichtet.

Die beiden parallel zueinander ausgerichteten Lagerbalken 3 des Gehäuseoberteils 2 sind an ihrem ersten Endbereich mittels zwei voneinander beabstandeten, parallel zueinander ausgerichteten Endplatten 5 verbunden. Auch an ihrem anderen Endbereich sind die Lagerbalken 3 mittels zwei voneinander beabstandeten, parallel zueinander ausgerichteten Endplatten 5 verbunden. Die Endplatten 5 erstrecken sich in der ersten Richtung mehr als in jeder anderen hierzu transversalen Richtung. Die Lagerbalken 3 erstrecken sich in der zweiten Richtung mehr als in jeder anderen zur zweiten Richtung transversalen Richtung.

Somit sind die Lagerbalken 3 des Gehäuseunterteils 2 mittels einer Doppeldeckerstruktur verbunden und die Lagerbalken 3 des Gehäuseunterteils 2 mittels einer Doppeldeckerstruktur verbunden. Hierdurch ist eine gleichförmige Ableitung von Kräften im Gehäuse erreichbar, die über die Wellen und deren Lager in die Lageraufnahme eingeleitet werden. Die Stabilität und Steifigkeit des Gehäuses ist somit erhöht.

Das Gehäuseoberteil 1 ist schalenartig ausgeführt. Die Lagerbalken 4 und die Endplatten 6 sind als Verdickungsbereiche, also aufgedickte Bereiche, im Gussteil ausgeformt. Die restlichen Bereiche des Gehäuseoberteils 1 sind mit dünner Wandstärke ausgeführt. Dies bedeutet, dass die dickste Wandstärke der restlichen Bereiche kleiner ist als die dickste Wandstärke des Gehäuses im Bereich der Lagerbalken 4 und der Endplatten 6.

Das Gehäuseunterteil 2 ist schalenartig ausgeführt. Die Lagerbalken 3 und die Endplatten 5 sind als Verdickungsbereiche, also aufgedickte Bereiche, im Gussteil ausgeformt. Die restlichen Bereiche des Gehäuseunterteils 2 sind mit dünner Wandstärke ausgeführt. Dies bedeutet, dass die dickste Wandstärke der restlichen Bereiche kleiner ist als die dickste Wandstärke des Gehäuses im Bereich der Lagerbalken 3 und der Endplatten 5.

Die Endplatten 6 sind mittels Abstandshaltern 20 voneinander beabstandet, welche auch Gewichtskraft einer der Endplatten 6 durchleiten.

Die Endplatten 5 sind ebenfalls mittels Abstandshaltern 20 voneinander beabstandet, welche auch Gewichtskraft einer der Endplatten 5 durchleiten.

Die Gewichtskraft der Lagerbalken 5 ist mittels Stützbalken 7 und Stützabschnitten 8 zu der Fußplatte 9 abgeleitet.

Diese Stützabschnitte 8 und Stützbalken 7 sowie die Fußplatte 9 zählen nicht zu den restlichen Bereichen mit dünner Wandstärke. Diese Stützabschnitte 8 und Stützbalken 7 sowie die Fußplatte 9 sind mit sehr hoher Dicke ausgeführt, um eine hohe Stabilität zu erreichen.

Die restlichen Bereiche, die Stützabschnitte 8, Stützbalken 7 die Fußplatte 9 sowie die Lagerbalken 3 und Endplatten 5 sowie die zugehörigen Abstandshalter 20 sind als Gehäuseunterteil 2 einstückig, also einteilig, ausgeführt.

Ebenso ist das Gehäuseoberteil 1, umfassend der Endplatten 6, der Lagerbalken 4, der zugehörigen Abstandshalter 20 und die restlichen Bereiche mit dünner Wandstärke zur Ausbildung des schalenartigen Gehäuseoberteils 1 einstückig, also einteilig, ausgeführt.

An seiner Oberseite weist das Gehäuseoberteil 1 eine mit einem Verschlussdeckelteil dicht verschließbare Ausnehmung auf.

Die Stützbalken 7 erstrecken sich senkrecht zur ersten und senkrecht zur zweiten Richtung, sind also weiter ausgedehnt in dieser Richtung als in der ersten oder zweiten Richtung.

Die Stützabschnitte 8 erstrecken sich senkrecht zur ersten und senkrecht zur zweiten Richtung, sind also weiter ausgedehnt in dieser Richtung als in der ersten oder zweiten Richtung.

### Bezugszeichenliste

1 Gehäuseoberteil
2 Gehäuseunterteil
3 Lagerbalken
4 Lagerbalken
5 Endplatte am Gehäuseunterteil 2
6 Endplatte am Gehäuseoberteil 1
7 Stützbalken
8 Stützabschnitt
9 Fußplatte
20 Abstandshalter

## Patentansprüche

1. Gehäuse für ein Getriebe,
wobei das Gehäuse ein auf ein Gehäuseunterteil (2) aufgesetztes Gehäuseoberteil (1) aufweist,
wobei eine erste Lageraufnahme für ein erstes Lager einer Welle von einem ersten Lagerbalken (3) des Gehäuseoberteils (1) und von einem ersten Lagerbalken (3) des Gehäuseunterteils (2) gebildet ist,
wobei eine zweite Lageraufnahme für ein zweites Lager einer Welle von einem zweiten Lagerbalken **(4)** des Gehäuseoberteils (1) und von einem zweiten Lagerbalken **(4)** des Gehäuseunterteils (2) gebildet ist,
**dadurch gekennzeichnet, dass**
ein erster Endbereich eines ersten Lagerbalkens (3) des Gehäuseunterteils (2) und ein erster Endbereich eines zweiten Lagerbalkens (4) des Gehäuseunterteils (2) mittels zweier, voneinander beabstandeter Endplatten (5, 6) verbunden ist,
**wobei der erste Lagerbalken (3), der zweite Lagerbalken (4) und die beiden Endplatten (5, 6) versteifende Abschnitte sind,**
**wobei das restliche Gehäuse ohne die versteifenden Abschnitte mit dünner Wandstärke ausführbar ist, also mit einer maximalen Wandstärke, welche kleiner ist als die maximale oder minimale Wandstärke der versteifenden Abschnitte.**

2. Gehäuse nach Anspruch 1,
**dadurch gekennzeichnet, dass**
ein zweiter, also der andere, Endbereich des erstens Lagerbalkens (3) des Gehäuseunterteils (2) und
ein zweiter, also der andere, Endbereich des zweitens Lagerbalkens (4) des Gehäuseunterteils (2)
mittels zweier, voneinander beabstandeter Endplatten (5, 6) verbunden ist.

3. Gehäuse nach Anspruch 1 oder 2,
**dadurch gekennzeichnet, dass**
ein erster Endbereich eines ersten Lagerbalkens (3) des Gehäuseoberteils (1) und ein erster Endbereich eines zweiten Lagerbalkens (4) des Gehäuseoberteils (1) mittels zweier, voneinander beabstandeter Endplatten (5, 6) verbunden ist,
und wobei
ein zweiter, also der andere, Endbereich des ersten Lagerbalkens (3) des Gehäuseoberteils (1) und
ein zweiter, also der andere, Endbereich des zweiten Lagerbalkens (4) des Gehäuseoberteils (1)
mittels zweier, voneinander beabstandeter Endplatten (5, 6) verbunden ist.

4. Gehäuse nach mindestens einem der vorangegangenen Ansprüche,
**dadurch gekennzeichnet, dass**
zumindest eine der Endplatten (5, 6) des Gehäuseoberteils (1) eine der Endplatten (5, 6) des Gehäuseunterteils (2) berührt.

5. Gehäuse nach mindestens einem der vorangegangenen Ansprüche,
**dadurch gekennzeichnet, dass**
zwischen Endplatten (5, 6) des Gehäuseoberteils (1), welche an den ersten Endbereichen der Lagerbalken (3, 4) des Gehäuseoberteils (1) verbunden sind, Abstandhalter (20) angeordnet sind und dass zwischen Endplatten (5, 6) des Gehäuseunterteils (2), welche an den ersten Endbereichen der Lagerbalken (3, 4) des Gehäuseunterteils (2) verbunden sind, Abstandhalter (20) angeordnet sind.

6. Gehäuse nach mindestens einem der vorangegangenen Ansprüche,
**dadurch gekennzeichnet, dass**
die Lagerbalken (3, 4) des Gehäuseunterteils (2) mittels Stützbalken (7) und Stützabschnitten (8) mit Fußplatten (9) des Gehäuseunterteils (2) verbunden sind, insbesondere zur Ableitung der Gewichtskraft der Lagerbalken (3, 4).

7. Gehäuse nach den Ansprüchen 5 und 6,
**dadurch gekennzeichnet, dass**
die Lagerbalken (3, 4), Endplatten (5, 6), Abstandshalter (20), Stützbalken (7), Stützabschnitte (8) und Fußplatte (9) des Gehäuseunterteils (2) einstückig, insbesondere einteilig, ausgeführt sind, insbesondere als Stahlgussteil.

8. Gehäuse nach Anspruch 5,
**dadurch gekennzeichnet, dass**
die Lagerbalken (3, 4), Endplatten (5, 6), Abstandshalter (20) des Gehäuseoberteils (1) einstückig, insbesondere einteilig, ausgeführt sind, insbesondere als Stahlgussteil.

9. Gehäuse nach **Anspruch 6,**
**dadurch gekennzeichnet, dass**
die Endplatten (5, 6) sich in einer Richtung weiter erstrecken, die senkrecht zur Richtung ausgerichtet ist, welche der weitesten Erstreckung der Lagerbalken (3, 4) zugeordnet ist,
insbesondere wobei die Stützbalken (7) und/oder Stützabschnitte (8) hauptsächlich in einer Richtung erstrecken, welche senkrecht zu den beiden Richtungen ausgerichtet ist.

10. Gehäuse nach **Anspruch 6 oder 9,**
**dadurch gekennzeichnet, dass**
das Gehäuseunterteil (2) schalenartig ausgeformt ist, wobei restliche Bereiche des Gehäuseunterteils (2) eine geringere Wandstärke aufweisen als die Wandstärke der Endplatte, der Lagerbalken (3, 4) und/oder der Stützabschnitte (8) und/oder der Stützbalken (7) beträgt.

## Claims

1. A housing for a transmission,
wherein the housing has an upper housing part (1) placed on a lower housing part (2),
wherein a first bearing receptacle for a first bearing of a shaft is formed by a first bearing bar (3) of the upper housing part (1) and by a first bearing bar (3) of the lower housing part (2),
wherein a second bearing receptacle for a second bearing of a shaft is formed by a second bearing bar (4) of the upper housing part (1) and by a second bearing bar (4) of the lower housing part (2),
**characterised in that**
a first end region of a first bearing bar (3) of the lower housing part (2) and a first end region of a second bearing bar (4) of the lower housing part (2) is connected by means of two end plates (5, 6) spaced apart from each other,
with the first bearing bar (3), the second bearing bar (4) and the two end plates (5, 6) being reinforcing portions,
with the remaining housing without the reinforcing portions being able to be embodied with a thin wall thickness, i.e. with a maximum wall thickness which is smaller than the maximum or minimum wall thickness of the reinforcing portions.

2. A housing according to Claim 1,
**characterised in that**
a second, i.e. the other, end region of the firstly bearing bar (3) of the lower housing part (2) and
a second, i.e. the other, end region of the secondly [sic] bearing bar (4) of the lower housing part (2)
is connected by means of two end plates (5, 6) spaced apart from each other.

3. A housing according to Claim 1 or 2,
**characterised in that**
a first end region of a first bearing bar (3) of the upper housing part (1) and
a first end region of a second bearing bar (4) of the upper housing part (1) is connected by means of two end plates (5, 6) spaced apart from each other,
and with
a second, i.e. the other, end region of the first bearing bar (3) of the upper housing part (1) and
a second, i.e. the other, end region of the second bearing bar (4) of the upper housing part (1)
being connected by means of two end plates (5, 6) spaced apart from each other.

4. A housing according to at least one of the preceding claims,
**characterised in that**
at least one of the end plates (5, 6) of the upper housing part (1) contacts one of the end plates (5, 6) of the lower housing part (2).

5. A housing according to at least one of the preceding claims,
**characterised in that**
spacers (20) are arranged between end plates (5, 6) of the upper housing part (1) which are connected to the first end regions of the bearing bars (3, 4) of the upper housing part (1),
and **in that**
spacers (20) are arranged between end plates (5, 6) of the lower housing part (2) which are connected to the first end regions of the bearing bars (3, 4) of the lower housing part (2).

6. A housing according to at least one of the preceding claims,
**characterised in that**
the bearing bars (3, 4) of the lower housing part (2) are connected by means of supporting bars (7) and supporting portions (8) to base plates (9) of the lower housing part (2), in particular for transferring the weight of the bearing bars (3, 4).

7. A housing according to Claims 5 and 6,
**characterised in that**
the bearing bars (3, 4), end plates (5, 6), spacers (20), supporting bars (7), supporting portions (8) and base plate (9) of the lower housing part (2) are embodied in one piece, in particular in one part, in particular as a cast steel part.

8. A housing according to Claim 5,
**characterised in that**
the bearing bars (3, 4), end plates (5, 6), spacers (20) of the upper housing part (1) are embodied in one piece, in particular in one part, in particular as a cast steel part.

9. A housing according to Claim 6,
**characterised in that**
the end plates (5, 6) extend further in a direction which is oriented perpendicularly to the direction which is associated with the furthest extent of the bearing bars (3, 4),
in particular with the supporting bars (7) and/or supporting portions (8) extending mainly in a direction which is oriented perpendicularly to the two directions.

10. A housing according to Claim 6 or 9,
**characterised in that**
the lower housing part (2) is formed in shell-like manner, with remaining regions of the lower housing part (2) having a lesser wall thickness than the wall thickness of the end plate, of the bearing bars (3, 4) and/or of the supporting portions (8) and/or of the supporting bars (7).

## Revendications

1. Boîte de transmission,
la boîte présentant une partie supérieure de boîte (1) placée sur une partie inférieure de boîte (2), un premier logement de palier pour un premier palier d'un arbre étant formé d'une première poutre palier (3) de la partie supérieure de boîte (1) et d'une première poutre palier (3) de la partie inférieure de boîte (2),
un deuxième logement de palier pour un deuxième palier d'un arbre étant formé d'une deuxième poutre palier (4) de la partie supérieure de boîte (1) et d'une deuxième poutre palier (4) de la partie inférieure de boîte (2),
**caractérisée en ce**
**qu'**une première région d'extrémité d'une première poutre palier (3) de la partie inférieure de boîte (2) et une première région d'extrémité d'une deuxième poutre palier (4) de la partie inférieure de boîte (2) sont connectées au moyen de deux plaques d'extrémité (5, 6) espacées l'une de l'autre,
la première poutre palier (3), la deuxième poutre palier (4) et les deux plaques d'extrémité (5, 6) étant des portions de renforcement,
le reste de la boîte pouvant être réalisé sans les portions de renforcement avec une épaisseur de paroi plus mince, c'est-à-dire avec une épaisseur de paroi maximale qui est inférieure à l'épaisseur de paroi maximale ou minimale des portions de renforcement.

2. Boîte selon la revendication 1,
**caractérisée en ce**
**qu'**une deuxième, c'est-à-dire l'autre, région d'extrémité de la première poutre palier (3) de la partie inférieure de boîte (2) et
une deuxième, c'est-à-dire l'autre, région d'extrémité de la deuxième poutre palier (4) de la partie inférieure de boîte (2) sont connectées au moyen de deux plaques d'extrémité (5, 6) espacées l'une de l'autre.

3. Boîte selon la revendication 1 ou 2, **caractérisée en ce**
**qu'**une première région d'extrémité d'une première poutre palier (3) de la partie supérieure de boîte (1) et une première région d'extrémité d'une deuxième poutre palier (4) de la partie supérieure de boîte (1) sont connectées au moyen de deux plaques d'extrémité (5, 6) espacées l'une de l'autre
et
une deuxième, c'est-à-dire l'autre, région d'extrémité de la première poutre palier (3) de la partie supérieure de boîte (1) et
une deuxième, c'est-à-dire l'autre, région d'extrémité de la deuxième poutre palier (4) de la partie supérieure de boîte (1) sont connectées au moyen de deux plaques d'extrémité (5, 6) espacées l'une de l'autre.

4. Boîte selon au moins l'une des revendications précédentes,
**caractérisée en ce**
**qu'**au moins l'une des plaques d'extrémité (5, 6) de la partie supérieure de boîte (1) vient en contact avec l'une des plaques d'extrémité (5, 6) de la partie inférieure de boîte (2).

5. Boîte selon au moins l'une des revendications précédentes,
**caractérisée en ce**
**qu'**entre les plaques d'extrémité (5, 6) de la partie supérieure de boîte (1) qui sont connectées au niveau des premières régions d'extrémité des poutres palier (3, 4) de la partie supérieure de boîte (1), sont disposés des éléments d'espacement (20) et en ce
**qu'**entre des plaques d'extrémité (5, 6) de la partie inférieure de boîte (2) qui sont connectées au niveau des premières régions d'extrémité des poutres palier (3, 4) de la partie inférieure de boîte (2) sont disposés des éléments d'espacement (20) .

6. Boîte selon au moins l'une des revendications précédentes,
**caractérisée en ce que**
les poutres palier (3, 4) de la partie inférieure de boîte (2) sont connectées au moyen de poutres support (7) et de portions de support (8) à des plaques de base (9) de la partie inférieure de boîte (2), en particulier pour dévier la force de pesanteur des poutres palier (3, 4).

7. Boîte selon les revendications 5 et 6,
**caractérisée en ce que**
les poutres palier (3, 4), les plaques d'extrémité (5, 6), les éléments d'espacement (20), les poutres support (7), les portions de support (8) et la plaque de base (9) de la partie inférieure de boîte (2) sont réalisés d'une seule pièce, en particulier sous forme monobloc, en particulier sous forme de pièce moulée en acier.

8. Boîte selon la revendication 5,
**caractérisée en ce que**
les poutres palier (3, 4), les plaques d'extrémité (5, 6), les éléments d'espacement (20) de la partie supérieure de boîte (1) sont réalisés d'une seule pièce, en particulier sous forme monobloc, en particulier sous forme de pièce moulée en acier.

9. Boîte selon la revendication 6,
**caractérisée en ce que**
les plaques d'extrémité (5, 6) s'étendent davantage dans une direction qui est perpendiculaire à la direction qui est associée à la plus large étendue des poutres palier (3, 4), en particulier les poutres support (7) et/ou les portions de support (8) s'étendent principalement dans une direction qui est perpendiculaire aux deux directions.

10. Boîte selon la revendication 6 ou 9,
**caractérisée en ce que**
la partie inférieure de boîte (2) est réalisée en forme de coque, les régions restantes de la partie inférieure de boîte (2) présentant une plus faible épaisseur de paroi que l'épaisseur de paroi de la plaque d'extrémité, des poutres palier (3, 4) et/ou des portions de support (8) et/ou des poutres support (7).
